# EUROPÄISCHE PATENTANMELDUNG

(11) **EP 2 579 636 A1**
(43) Veröffentlichungstag der Anmeldung: **10.04.2013**
(21) Anmeldenummer: 11075223.5
(22) Anmeldetag: 07.10.2011
(51) Int. Cl.: H04W 12/12, H04L 29/06, H04L 29/08

(54) **Verfahren für einen sicheren Austausch von Daten zwischen Endgeräten**

(71) Anmelder: Deutsche Telekom AG, 53113 Bonn (DE)
(72) Erfinder: Kunze, Rüdiger, 16552 Schildow (DE); Jontosohn, Walter, 10585 Berlin (DE)
(74) Vertreter: Drosch, Ulrich

(57) **Zusammenfassung**

Das Verfahren bezieht sich auf einen Datenaustausch zwischen Endgeräten (1, 2), welche jeweils mit ersten Sende- und Empfangsmitteln für den Mobilfunk und mindestens mit zweiten, eine andere Übertragungstechnik verwendeten Sende- und Empfangsmitteln ausgestattet sind und über einen mittels der ersten Sende- und Empfangsmittel nutzbaren Zugang zu Netzeinrichtungen (3) eines Mobilfunknetzes verfügen.

Die Daten werden zwischen den Endgeräten (1, 2) mittels ihrer zweiten Sende- und Empfangsmittel über eine Direktverbindung (4) übertragen. Zum Aufbau dieser Direktverbindung (4) identifizieren sich die Endgeräte (1, 2) gegenseitig mittels jeweils einer Identifizierungsinformation, deren Authentizität aufgrund einer zuvor erfolgten Authentifizierung gegenüber den Netzeinrichtungen (3) als gegeben angesehen wird. Unter dieser Identifizierungsinformation werden für das jeweilige zur Nutzung des Verfahrens berechtigte Endgerät (1, 2) in einer von den Netzeinrichtungen (3) gehaltenen Datenbank Erreichbarkeitsinformationen gespeichert, welche den Aufbau der Direktverbindung (4) für den Datenaustausch ermöglichen und von den Endgeräten (1, 2) vor dem Aufbau der Direktverbindung (4) bei den Netzwerkeinrichtungen (3) des Mobilfunknetzes, in welches die Endgeräte (1, 2) eingebucht sind, abgefragt werden.

## Beschreibung

Die Erfindung betrifft eine Lösung für einen sicheren Austausch von Daten zwischen Endgeräten. Sie bezieht sich auf ein entsprechendes Verfahren, bei welchem beim Aufbau einer Verbindung für den Datenaustausch übertragene Daten und/oder die später über diese Verbindung ausgetauschten Daten gemäß einer bevorzugten Ausgestaltung der Erfindung in verschlüsselter Form übertragen werden.

Die ständig steigende Durchdringung aller Lebensbereiche mit elektronischen Geräten zur Speicherung, Wiedergabe und Verarbeitung von Informationen ist eng mit dem Bedürfnis verbunden, die Daten, welche die entsprechenden Informationen jeweils repräsentieren, möglichst überall und sofort verfügbar zu haben. Dies gilt insbesondere auch im Zusammenhang mit der zunehmenden Verwendung mobiler Endgeräte. So sollen zum Beispiel Bilder beziehungsweise Fotos, Kalender- beziehungsweise Termininformationen, Videos oder Musiktitel auf einem mobilen Endgerät, wie beispielsweise einem Smartphone oder einem Tablet-PC, ebenso wie auf dem häuslichen PC zur Wiedergabe zur Verfügung stehen. Folglich gilt es, die entsprechenden Daten auf allen zur Informationswiedergabe geeigneten elektronischen Endgeräten aktuell zu halten oder unkompliziert ihren jederzeitigen Austausch beziehungsweise ihre Synchronisation zu ermöglichen.

Zu diesem Zweck werden beispielsweise durch verschiedene Dienstleistungsanbieter so genannte Cloud-Services offeriert, bei deren Nutzung die auf unterschiedlichen Geräten eines Nutzers oder einer Gruppe von Nutzern verfügbar zu machenden Daten auf über das Internet zugänglichen Servern des betreffenden Dienstleistungsanbieters gespeichert werden. Von diesen Servern können sie von dazu berechtigten Nutzern nach entsprechender Authentifizierung unter Verwendung unterschiedlicher Endgeräte über das Internet abgerufen werden. Dem Bedürfnis nach einem unkomplizierten Datenaustausch wird mit dieser Lösung ohne Weiteres entsprochen. Sofern gewünscht, kann unter Nutzung der Cloud-Services und Verwendung einer entsprechenden Client-Software auf den für den Datenaustausch über die Cloud-Services genutzten Endgeräten in vorteilhafter Weise auch eine Synchronisierung des Datenbestands der Endgeräte mit dem jeweils auf den dafür vorgesehenen Einrichtungen des Service-Anbieters gehaltenen aktuellen Datenbestand erfolgen. Der hierdurch gegebenen hohen Flexibilität steht jedoch der tatsächliche Nachteil oder auch nur als Nachteil empfundene Umstand gegenüber, dass die auf diese Weise ausgetauschten Daten einem Dritten, nämlich dem jeweiligen Dienstleistungsanbieter für die Cloud-Services, zur Verfügung gestellt werden müssen. Insbesondere im Hinblick auf sicherheitssensible Daten besteht hierbei die Gefahr, dass sich weitere, unbefugte Personen Zugriff auf die Daten und die durch sie abgebildeten Informationen verschaffen können. Zudem besteht aus der Sicht des Nutzers die Gefahr, dass bei dem Dienstleistungsanbieter infolge einer eventuellen Havarie möglicherweise wertvolle Daten unwiederbringlich verloren gehen. Hieraus ergibt sich das Bedürfnis eines sichereren Datenaustausches, bei dem eine Zwischenspeicherung der Daten auf eventuell für Unbefugte zugänglichen Netzeinrichtungen unterbleibt.

Aufgabe der Erfindung ist es daher, eine alternative Lösung für einen sicheren Austausch von Daten zwischen Endgeräten bereitzustellen, durch welche ein Zugriff unbefugter Dritter auf die Daten weitgehend ausgeschlossen ist. Hierfür ist ein entsprechendes Verfahren anzugeben.

Die Aufgabe wird durch ein Verfahren mit den Merkmalen des Patentanspruchs 1 gelöst. Vorteilhafte Aus- beziehungsweise Weiterbildungen der Erfindung sind durch die Unteransprüche gegeben.

Das zur Lösung der Aufgabe vorgeschlagene Verfahren geht von einem Datenaustausch zwischen Endgeräten aus, welche jeweils mit ersten Sende- und Empfangsmitteln für den Mobilfunk beziehungsweise einem Mobilfunkinterface und mindestens mit zweiten, eine andere Übertragungstechnik verwendeten Sende- und Empfangsmitteln ausgestattet sind. Über eine entsprechende Hardwareausstattung verfügt eine Vielzahl heute für die Kommunikation verwendeter - zumeist mobiler - Geräte. Hierbei kann es sich beispielsweise um Smartphones handeln, welche im Allgemeinen nicht nur zur Nutzung des Mobilfunks geeignet sind, sondern häufig auch über ein WLAN-Modul verfügen, mittels welchem sie in ein häusliches Netzwerk eingebunden werden können oder die Nutzung des Internets über einen öffentlichen Accesspoint, einen so genannten Hotspot, ermöglicht ist. Ferner ist hierbei an Geräte wie Tablet-PCs zu denken, welche teilweise ein integriertes GSM-Modul aufweisen oder ebenso wie Notebooks und vergleichbare tragbare beziehungsweise mobile Computer mit Hilfe eines entsprechenden GSM-fähigen USB-Moduls (GSM-Stick) oder dergleichen zur Nutzung des Mobilfunks verwendbar sind. Im Hinblick auf die genannten ersten Sende- und Empfangsmittel für den Mobilfunk geht das Verfahren davon aus, dass die zu seiner Nutzung ausgebildeten Endgeräte selbstverständlich auch über einen mittels dieser Sende- und Empfangsmittel nutzbaren Zugang zu Netzeinrichtungen eines Mobilfunknetzes verfügen.

Gemäß dem vorgeschlagenen Verfahren werden jedoch die zwischen den Endgeräten auszutauschenden Daten mittels ihrer zweiten, nicht zur Nutzung des Mobilfunks ausgebildeten Sende- und Empfangsmittel über eine zwischen ihnen aufgebaute Direktverbindung übertragen. Dabei ist das Verfahren so gestaltet, dass sich die Endgeräte zum Aufbau dieser Direktverbindung gegenseitig mittels jeweils einer Identifizierungsinformation identifizieren, deren Authentizität aufgrund einer zuvor unter Verwendung der ersten Sende- und Empfangsmittel erfolgten Authentifizierung gegenüber den Netzeinrichtungen des Mobilfunknetzes als gegeben angesehen wird. Unter der vorgenannten Identifizierungsinformation werden erfindungsgemäß für das jeweilige zur Nutzung des Verfahrens berechtigte Endgerät in einer von den angesprochenen Netzeinrichtungen des Mobilfunknetzes gehaltenen Datenbank Erreichbarkeitsinformationen gespeichert, welche den Aufbau der Direktverbindung für den Datenaustausch ermöglichen. Bei den Erreichbarkeitsinformationen handelt es sich um die Adresse mindestens eines, vorzugsweise aller für die Kommunikation mit anderen Geräten nutzbaren Interfaces eines jeweiligen Endgerätes. Vor dem Aufbau einer Direktverbindung zwischen zwei Endgeräten werden diese Erreichbarkeitsinformationen, veranlasst durch eine auf den Endgeräten zur Nutzung des Verfahrens jeweils ablaufende softwarebasierte Anwendung, von jedem der an dem Verbindungsaufbau beteiligten Endgeräte für das jeweils andere Endgerät mittels der ersten Sende- und Empfangsmittel bei den Netzwerkeinrichtungen des Mobilfunknetzes, in welches die Endgeräte eingebucht sind, abgefragt. Bei der zwischen den Endgeräten aufgebauten Direktverbindung handelt es sich vorzugsweise um eine IP-Verbindung, welche gegebenenfalls auch als WLAN-Verbindung hergestellt werden kann. Denkbar ist aber auch ein Verbindungsaufbau unter Nutzung von Techniken für den Aufbau eines so genannten Ad-hoc-Netzwerks. Dabei ist es als vorteilhaft anzusehen, dass zwar das Mobilfunknetz beziehungsweise dessen netzseitige Einrichtungen gewissermaßen als vertrauenswürdige Instanz bezüglich der Identifizierung zum Aufbau der Direktverbindung und zur Verteilung der Erreichbarkeitsinformationen sowie gegebenenfalls - gemäß einer noch zu erläuternden Ausgestaltungeinzusetzender Schlüssel dient, aber der eigentliche Datenaustausch nicht über das Mobilfunknetz erfolgt. Hierdurch ist ein Offload von Datenverkehr aus dem Mobilfunknetz gegeben, welcher zu einer Entlastung des Mobilfunknetzes führt.

Das Verfahren bezieht sich vorzugsweise auf eine Konstellation, bei welcher es durch einen Nutzer für den Datenaustausch zwischen unterschiedlichen von ihm genutzten Endgeräten verwendet wird, wobei der betreffende Nutzer den Mobilfunk mittels dieser verschiedenen Endgeräte vorzugsweise über ein und denselben für ihn registrierten Account benutzt. Grundsätzlich ist es aber auch denkbar, das Verfahren zum Datenaustausch zwischen Geräten verschiedener Nutzer und/oder zwischen Geräten, welche sich für den Zugang zum Mobilfunk unterschiedlicher Accounts bedienen, nutzbar zu machen. Im Hinblick darauf, dass die zum Aufbau der Direktverbindung zwischen den Endgeräten benötigten Erreichbarkeitsinformationen, wie beispielsweise die jeweils aktuellen IP-Adressen der Endgeräte, in einer durch Netzeinrichtungen eines Mobilfunknetzes gehaltenen Datenbank in Zuordnung zu einer jeweiligen Identifizierungsinformation - nämlich den Zugangsdaten zur Nutzung eines Mobilfunkaccounts - gespeichert werden, wird das Verfahren selbstverständlich netzseitig ebenfalls mittels einer auf den Netzeinrichtungen ablaufenden softwarebasierten Anwendung realisiert. Durch diese Anwendung werden die genannten Daten in der Datenbank verwaltet und ihr für das Verfahren erforderlicher Austausch zwischen den Endgeräten und den die Datenbank haltenden Netzeinrichtungen gesteuert. Die Verwaltung der Daten kann dabei zum Beispiel durch eine entsprechende Erweiterung für den Mobilfunk und die Authentifizierung seiner Nutzer ohnehin vorhandener Datenbanken erfolgen. Zu denken ist hierbei an eine Nutzung der beim GSM-Funk auf dem Home-Subscriber-Server gehaltenen Datenbank (HSS-Datenbank) oder der Mobility-Management-Entity (MME) in LTE-Netzen. Insoweit ist es selbstverständlich auch möglich, dass hierbei Netzeinrichtungen unterschiedlicher Mobilfunknetzbetreiber interagieren und die zur Nutzung des Verfahrens erforderlichen, bei ihnen unter der Identifizierungsinformation zusätzlich gespeicherten Daten untereinander austauschen.

Entsprechend einer besonders bevorzugten Ausgestaltung des Verfahrens erfolgen die Aufforderung zum Aufbau einer Direktverbindung, die Übertragung für den Verbindungsaufbau unter Nutzung der Identifizierungsinformation erforderlicher Daten und/oder der spätere Datenaustausch in verschlüsselter Form. Hierbei wird in der durch die Netzeinrichtungen des Mobilfunknetzes gehaltenen Datenbank außer den bereits angesprochenen Erreichbarkeitsinformationen für ein jeweiliges Endgerät ein öffentlicher Schlüssel in Zuordnung zu der Identifizierungsinformation gespeichert. Der betreffende öffentliche Schlüssel, welcher Teil eines Schlüsselpaares ist, dessen geheimer Schlüssel auf dem zugehörigen Endgerät gespeichert ist, wird ebenso wie die Erreichbarkeitsinformationen vor dem Aufbau einer Direktverbindung von einem am Verbindungsaufbau beteiligten Endgerät für das jeweils andere Endgerät bei den Netzeinrichtungen des Mobilfunkproviders abgefragt.

Im Falle eines Verbindungsaufbaus und/oder eines Datenaustausches unter Verwendung verschlüsselter Daten wird diese Direktverbindung gemäß einer vorgeschlagenen Ausbildungsform des Verfahrens als VPN-Tunnel aufgebaut. Über diesen VPN-Tunnel werden Daten zwischen den Endgeräten vorzugsweise unter Nutzung des lPsec-Sicherheitsprotokolls übertragen. Selbstverständlich kommt aber auch die Nutzung anderer Übertragungsprotokolle in Betracht.

Zur Durchführung des Verfahrens ist es selbstverständlich unerlässlich, dass die Erreichbarkeitsinformationen der das Verfahren nutzenden Endgeräte und der von ihnen gegebenenfalls verwendete öffentliche Schlüssel von den Endgeräten an die, diese Informationen in einer Datenbank, wie der HSS-Datenbank, speichernden Netzeinrichtungen des Mobilfunknetzes wenigstens einmal übertragen werden. Insbesondere, wenn es sich bei der für den Datenaustausch aufzubauenden Direktverbindung um eine IP-Verbindung handelt, erfolgt die Übertragung der Erreichbarkeitsinformationen für ein Endgerät, nämlich zum Bespiel zumindest einer aktuellen IP-Adresse (und gegebenenfalls im Falle von NAT einer Port-Nummer) des Endgerätes beziehungsweise seines oder seiner für die IP-Kommunikation genutzten Interfaces, im Hinblick auf die allgemein übliche Verwendung dynamischer IP-Adressen vorzugsweise mehrmals. Ähnliches gilt für die Schlüssel, die häufig eine begrenzte Gültigkeitsdauer besitzen. Für die vorzugsweise regelmäßige Aktualisierung der entsprechenden Erreichbarkeitsinformationen und gegebenenfalls der verwendeten öffentlichen Schlüssel sind dabei unterschiedliche Möglichkeiten gegeben.

Vorzugsweise werden die Erreichbarkeitsinformationen für ein Endgerät und ein gegebenenfalls von ihm verwendeter öffentlicher Schlüssel beim Einbuchen des betreffenden Endgerätes in das Mobilfunknetz durch die auf dem Endgerät zur Nutzung des Verfahrens ablaufende Anwendung an die Netzeinrichtungen des Mobilfunknetzes übertragen. Die entsprechenden Informationen werden dann dort in der netzseitig gehaltenen Datenbank aktualisiert.

Ferner werden diese Informationen (Erreichbarkeitsinformationen und Schlüssel) vorzugsweise außerdem im Falle einer Änderung der Erreichbarkeit eines Endgeräts (also zum Beispiel bei einer Änderung seiner dynamischen IP-Adresse) und/oder des verwendeten öffentlichen Schlüssels an die Netzeinrichtungen des Mobilfunknetzes gesendet und in der netzseitig gehaltenen Datenbank aktualisiert. Schließlich kann eine Aktualisierung dieser Informationen außerdem auch noch im Zusammenhang mit der Einleitung eines Verbindungsaufbaus zur Datenübertragung zwischen zwei Endgeräten erfolgen. Dabei werden die Erreichbarkeitsinformationen und eventuell verwendete öffentliche Schlüssel im Moment einer zum Aufbau einer Direktverbindung an die Netzeinrichtungen des Mobilfunknetzes gerichteten Anfrage durch eine auf den Netzeinrichtungen des Mobilfunknetzes ablaufende softwarebasierte Anwendung bei den Endgeräten abgefragt und in der netzseitig gehaltenen Datenbank aktualisiert.

In den vorgenannten Fällen erfolgt die Aktualisierung der Erreichbarkeitsinformationen und eventueller Schlüssel gewissermaßen ereignisgesteuert, nämlich im Zusammenhang mit Ereignissen wie dem Einbuchen eines Endgeräts in das Mobilfunknetz, der Änderung von Erreichbarkeitsinformationen oder Schlüsseln und mit der Anfrage beziehungsweise dem Wunsch zum Aufbau einer Datenverbindung.

Gemäß einer weiteren oder gegebenenfalls auch zusätzlich genutzten Möglichkeit geschieht die Aktualisierung der Erreichbarkeitsinformationen und der Schlüssel dadurch, dass diese durch die auf einem jeweiligen Endgerät zur Nutzung des Verfahrens ablaufende Anwendung zeitzyklisch an die Netzeinrichtungen des Mobilfunknetzes übertragen werden. Die entsprechenden Informationen beziehungsweise die sie abbildenden zeitzyklisch übertragenen Daten werden durch die bereits angesprochene, zur netzseitigen Steuerung des Verfahrens dienende Anwendung in der netzseitig gehaltenen Datenbank jeweils aktualisiert.

Eine weitere Möglichkeit besteht grundsätzlich auch darin, dass die bereits erwähnte, auf den Netzeinrichtungen des Mobilfunknetzes ablaufende softwarebasierte Anwendung die betreffenden Daten ihrerseits zeitzyklisch bei den das Verfahren nutzenden Endgeräten abfragt und diese jeweils in der netzseitig gehaltenen Datenbank aktualisiert. Dies kommt gewissermaßen einem von den Netzeinrichtungen des Mobilfunknetzes ausgehendem Polling gleich. Allerdings ist einer durch die Endgeräte initiierten, insbesondere einer ereignisgesteuerten Aktualisierung im Hinblick auf die andernfalls gegebene Netzbelastung und netzseitig erforderlichen Aufwand der Vorzug zu geben.

Anhand von Zeichnungen soll nachfolgend ein Ausführungsbeispiel der Erfindung erläutert werden. In den zugehörigen Zeichnungen zeigen:
- Fig. 1:: eine schematische Darstellung der Abläufe zur Speicherung der für die Durchführung des Verfahrens benötigten Informationen in Netzeinrichtungen eines Mobilfunknetzes,
- Fig. 2:: eine schematische Darstellung der Abläufe bei der Abfrage der zum Aufbau der Direktverbindung benötigten Informationen durch die in die Direktverbindung einzubeziehenden Endgeräte,
- Fig. 3:: eine schematische Darstellung der Abläufe beim Aufbau einer als VPN-Tunnel ausgebildeten Direktverbindung.

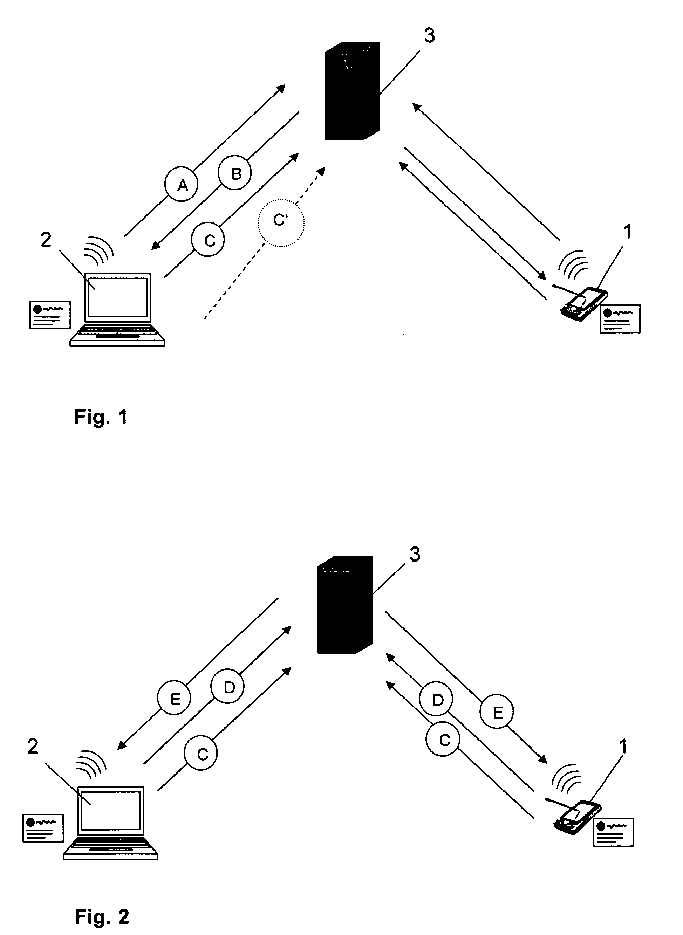

Die Fig. 1 verdeutlicht in Form einer schematischen Darstellung die Abläufe zur Hinterlegung der für die Durchführung des Verfahrens benötigten Informationen, also zumindest der Erreichbarkeitsinformationen für die das Verfahren nutzenden Endgeräte 1, 2, in den Netzeinrichtungen 3 eines Mobilfunknetzes. Hierbei sei angenommen, dass das Verfahren für einen Datenaustausch zwischen einem Smartphone (Endgerät 1) und einem Laptop (Endgerät 2) eines Nutzers eingesetzt wird. Beide Endgeräte 1, 2 des betreffenden Nutzers, also der Laptop und das Smartphone, verfügen über erste Sende- und Empfangsmittel beziehungsweise Sende- und Empfangseinheiten für den Mobilfunk. Unter Nutzung einer Twincard, nämlich zweier unter einem Account für den Nutzer registrierten SIM-Karten oder USIM-Karten (Universal Subscriber Identity Module), von denen je eine an jeweils eines der Endgeräte 1, 2 gekoppelt ist, haben die Endgeräte Zugang zu den Netzeinrichtungen 3 eines Mobilfunknetzes. Wie beispielsweise von GSM-Netzen her bekannt, wird dabei auf einem netzseitigen Server die so genannte HSS-Datenbank gehalten, in welcher die den Kunden identifizierenden Zugangsdaten für den Account, nämlich insbesondere die IMEI (International Mobile Station Equipment Identity), also die Identifikationsnummer der Sende- und Empfangsmittel für den Mobilfunk beziehungsweise des Mobilfunkinterfaces des jeweiligen Endgerätes 1, 2 und die an die jeweilige SIM-Karte oder USIM-Karte gekoppelte IMSI (International Mobile Subscriber Identity), gespeichert sind.

In Umsetzung des erfindungsgemäßen Verfahrens ist die betreffende Datenbank dahingehend erweitert, dass in Zuordnung zu den jeweiligen Identifizierungsinformationen, nämlich beispielsweise der IMEI und/oder der IMSI, in dieser Erreichbarkeitsinformationen und ein von dem jeweiligen Endgerät 1, 2 verwendeter öffentlicher Schlüssel gespeichert sind. Bei den vorgenannten Erreichbarkeitsinformationen handelt es sich gemäß dem dargestellten Beispiel um mindestens eine IP-Adresse des Endgerätes 1, 2 oder mindestens eines für die Kommunikation mit anderen Endgeräten ausgebildeten Interfaces. Beim Einbuchen in das Mobilfunknetz authentifizieren (A) sich die Endgeräte 1, 2, also das Smartphone und der Laptop, wie im Mobilfunk üblich, gegenüber den Netzeinrichtungen des Mobilfunknetzes beziehungsweise gegenüber dem im Schema dafür symbolisch dargestellten Server. Das erfolgreiche Einbuchen wird von dem Server gegenüber dem jeweiligen Gerät quittiert (B). Danach überträgt das jeweilige Endgerät, initiiert durch eine auf ihm ablaufende softwarebasierte Anwendung (App), seine aktuelle IP-Adresse(n) und einen öffentlichen Schlüssel an den genannten Server des Mobilfunknetzes (C). Sofern ein Endgerät 1, 2 Teil eines lokalen Netzwerkes ist und an das Weitverkehrsnetz (WAN), wie das Internet, über einen Router oder eine Firewall angebunden ist, so dass es von außen nur im Wege des NAT (Network Address Translation) ansprechbar ist, wird unter Nutzung des TURN-Protokoll (TURN = Traversal Using Relays around NAT) gegebenenfalls neben der aktuellen IP-Adresse des Routers oder der Firewall zusätzlich eine Port-Adresse des Endgerätes 1, 2 mit an die Netzeinrichtungen 3 des Mobilfunknetzes übertragen. Dies ist in der Fig. 1 unter (C') mit dem gestrichelten Pfeil angedeutet, soll aber nachfolgend nicht weiter betrachtet beziehungsweise vertieft werden.

Die Zertifikate werden von den Endgeräten 1, 2 erstellt und an die eine so genannte "Trusted Third Party" (vertrauenswürdige Dritte Partei) ausbildenden Netzeinrichtungen 3 des Mobilfunknetzes übertragen. Wenn ein Schlüssel invalidiert, das heißt für nicht mehr gültig erklärt wird (jeder Schlüssel beinhaltet ein Ablaufdatum), so wird dies durch die ausstellende Entität (hier das entsprechende Endgerät 1, 2) durchgeführt. Die Trusted Third Party beziehungsweise die Netzeinrichtungen 3 halten eine Liste der zurückgezogenen Schlüssel. Die Netzeinrichtungen könnten im Push-Verfahren die Liste der zurückgezogenen Schlüssel übertragen, so dass das jeweilige Endgerät 1, 2 prüfen kann, ob es einen gültigen Schlüssel der Gegenstelle vorliegen hat. Wenn dies nicht der Fall ist, kann es diesen anfordern. Auf diese Weise kann vermieden werden, dass die Schlüssel jedes Mal übertragen werden müssen.

Unabhängig von der genauen Ausgestaltung des Schlüsselmanagements (Schlüsselaustausches) stehen nach dem zuvor geschilderten Ablauf den beiden Endgeräten 1, 2 die zum Aufbau einer Direktverbindung zwischen ihnen erforderlichen Informationen, nämlich die IP-Adresse und der für die verschlüsselte Datenübertragung zu verwendende öffentliche Schlüssel, welche in den Netzeinrichtungen 3 beziehungsweise einem Server des Mobilfunknetzes in einer Datenbank in Zuordnung zu der für die Authentifikation verwendeten Identifizierungsinformationen (IMEI und/oder IMSI) gehalten werden, zur Verfügung.

Der sich vor dem Aufbau der Direktverbindung für den Datenaustausch vollziehende Ablauf ist in der Fig. 2 schematisch dargestellt. Vor dem Aufbau einer Direktverbindung für den Datenaustausch zwischen den Endgeräten 1, 2, also dem Laptop und dem Smartphone, welcher beispielsweise ausgehend vom Smartphone durch Betätigung einer von der auf ihm ablaufenden App auf dessen Touchscreen dargestellten virtuellen Taste erfolgt, werden die in Zuordnung zur Identifizierungsfunktion in der Datenbank des Servers gehaltenen zusätzlichen Informationen, nämlich die Erreichbarkeitsinformationen und der öffentliche Schlüssel, durch die Endgeräte 1, 2, zwischen denen die Direktverbindung aufgebaut werden soll, für das jeweils andere Endgerät 1, 2 abgefragt und erforderlichenfalls zuvor aktualisiert (D) und (E). Durch das Smartphone erfolgt diese Abfrage im Zusammenhang mit dem beispielsweise durch Antippen der virtuellen Taste auf dem Touchscreen bewirkten Verbindungsaufbau. Die entsprechenden Funktionen, nämlich Auswahl eines Endgerätes 1, 2 mit welchem ein Datenaustausch erfolgen soll, Anstoßen des Verbindungsaufbaus und damit verbundene Abfrage der Erreichbarkeitsinformationen und des öffentlichen Schlüssels des betreffenden Endgeräts 1, 2, werden durch die schon mehrfach erwähnte, auf dem den Verbindungsaufbau einleitenden Endgerät 1, 2 (hier Endgerät 1 = Smartphone) ablaufende App bereitgestellt. Seitens des von dem Smartphone zum Aufbau einer Verbindung für den Datenaustausch angesprochenen Laptops erfolgt die entsprechende Abfrage der vorgenannten Informationen, also der IP-Adresse und des öffentlichen Schlüssels des Smartphones, aufgrund einer durch eine Anwendung auf dem Server gesteuerten Mitteilung der netzseitigen Einrichtungen 3, wonach das Smartphone den Aufbau einer Datenverbindung zu dem Laptop wünscht.

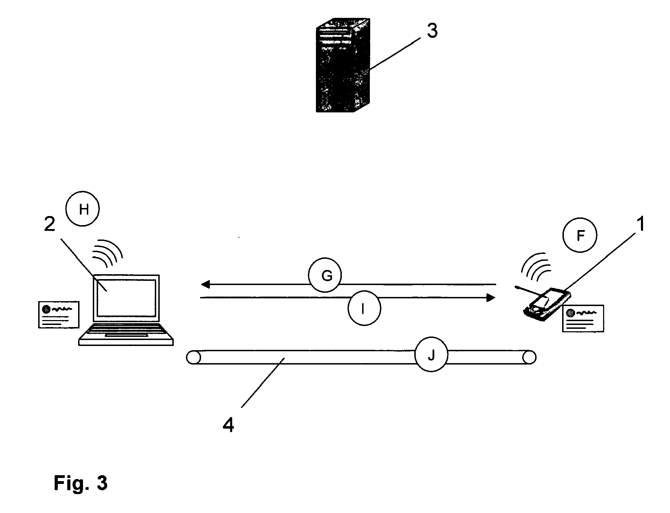

Sobald die erforderlichen Daten an den Endgeräten vorliegen, wird dann durch das Smartphone der Aufbau der IP-Direkt-Verbindung zu dem Laptop unter Verwendung von dessen bei den Netzwerkeinrichtungen des Mobilfunknetzes abgefragter aktueller IP-Adresse gemäß der schematischen Darstellung in der Fig. 3 aufgebaut. Hierfür sendet das Smartphone einen entsprechenden Request (G) an den Laptop, wobei der Request einen aus dem öffentlichen Schlüssel des Laptops abgeleiteten Sitzungsschlüssel umfasst. Letzterer wird dabei an den Laptop in verschlüsselter Form übermittelt, wobei seine Verschlüsselung mit dem öffentlichen Schlüssel dieses Endgeräts 2 also des Laptops erfolgt. Nach einer entsprechenden Response (I) des Laptops wird die Direktverbindung zwischen den Endgeräten (1, 2) als VPN-Tunnel 4 aufgebaut (J), über welchen der Datenaustausch ebenfalls verschlüsselt unter Verwendung des zwischen den Endgeräten 1, 2 vereinbarten Sitzungsschlüssels (Session-Schlüssels) erfolgen kann.

## Patentansprüche

1. Verfahren für einen sicheren Austausch von Daten zwischen Endgeräten (1, 2), welche jeweils mit ersten Sende- und Empfangsmitteln für den Mobilfunk und mindestens mit zweiten, eine andere Übertragungstechnik verwendenden Sende- und Empfangsmitteln ausgestattet sind und über einen mittels der ersten Sende- und Empfangsmittel nutzbaren Zugang zu Netzeinrichtungen (3) eines Mobilfunknetzes verfügen, **dadurch gekennzeichnet, dass** die Daten über eine zwischen den Endgeräten (1, 2) mittels ihrer zweiten Sende- und Empfangsmittel aufgebaute Direktverbindung (4) übertragen werden und dass sich die Endgeräte (1, 2) zum Aufbau dieser Direktverbindung (4) untereinander mittels jeweils einer Identifizierungsinformation identifizieren, deren Authentizität aufgrund einer zuvor unter Verwendung der ersten Sende- und Empfangsmittel erfolgten Authentifizierung gegenüber den Netzeinrichtungen (3) des Mobilfunknetzes als gegeben angesehen wird und unter welcher in einer von diesen Netzeinrichtungen (3) gehaltenen Datenbank den Aufbau der Direktverbindung (4) ermöglichende Erreichbarkeitsinformationen für das jeweilige, das Verfahren nutzende Endgerät (1, 2) gespeichert sind, welche vor dem Aufbau einer Direktverbindung (4) zwischen zwei Endgeräten (1, 2), veranlasst durch eine auf ihnen zur Nutzung des Verfahrens ablaufende softwarebasierte Anwendung, für das jeweils andere Endgerät (1, 2) mittels der ersten Sende- und Empfangsmittel bei den Netzeinrichtungen (3) des Mobilfunknetzes, in welches die Endgeräte eingebucht sind, abgefragt werden.

2. Verfahren nach Anspruch 1, **dadurch gekennzeichnet, dass** zwischen den Endgeräten (1, 2) als Direktverbindung (4) für den Datenaustausch eine IP-Verbindung aufgebaut wird.

3. Verfahren nach Anspruch 1 oder 2, wobei die Daten im Zusammenhang mit dem Aufbau der Direktverbindung (4) zwischen den Endgeräten übertragene Daten und/oder die über die Direktverbindung (4) ausgetauschten Daten verschlüsselt übertragen werden, **dadurch gekennzeichnet, dass** in der durch die Netzeinrichtungen (3) des Mobilfunknetzes gehaltenen Datenbank in Zuordnung zu der Identifizierungsinformation für ein jeweiliges Endgerät (1, 2) ein öffentlicher Schlüssel abgespeichert wird, welcher als Teil eines Schlüsselpaares, dessen geheimer Schlüssel auf dem betreffenden Endgerät (1, 2) gespeichert ist, und welcher vor dem Aufbau einer Direktverbindung (4) ebenfalls bei den Netzeinrichtungen (3) des Mobilfunkproviders abgefragt wird.

4. Verfahren nach Anspruch 3, **dadurch gekennzeichnet, dass** zwischen den Endgeräten (1, 2) zur Direktverbindung (4) ein VPN-Tunnel aufgebaut wird, über welchen die Daten übertragen werden.

5. Verfahren nach Anspruch 4, **dadurch gekennzeichnet, dass** die Daten zwischen den Endgeräten (1, 2) über den VPN-Tunnel unter Nutzung des IPsec-Sicherheitsprotokolls übertragen werden.

6. Verfahren nach einem der Ansprüche 1 bis 5, **dadurch gekennzeichnet, dass** die Erreichbarkeitsinformationen für ein Endgerät (1, 2) und ein gegebenenfalls von ihm verwendeter öffentlicher Schlüssel beim Einbuchen des Endgerätes (1, 2) in das Mobilfunknetz durch die auf dem betreffenden Endgerät (1, 2) zur Nutzung des Verfahrens ablaufende Anwendung an die Netzeinrichtungen (3) des Mobilfunknetzes übertragen und dort in der netzseitig gehaltenen Datenbank aktualisiert werden.

7. Verfahren nach einem der Ansprüche 1 bis 6, **dadurch gekennzeichnet, dass** die Erreichbarkeitsinformationen für ein Endgerät (1, 2) und ein gegebenenfalls von ihm verwendeter öffentlicher Schlüssel im Falle einer Änderung seiner Erreichbarkeit und/oder des verwendeten öffentlichen Schlüssels an die Netzeinrichtungen (3) des Mobilfunknetzes gesendet und in der netzseitig gehaltenen Datenbank aktualisiert werden.

8. Verfahren nach einem der Ansprüche 1 bis 7, **dadurch gekennzeichnet, dass** die Erreichbarkeitsinformationen für die Endgeräte (1, 2) und die gegebenenfalls von ihnen verwendeten öffentlichen Schlüssel im Moment einer zum Aufbau einer Direktverbindung (4) an die Netzeinrichtungen (3) des Mobilfunknetzes gerichteten Anfrage durch eine auf den Netzeinrichtungen (3) des Mobilfunknetzes ablaufende softwarebasierte Anwendung bei den Endgeräten (1, 2) abgefragt und in der netzseitig gehaltenen Datenbank aktualisiert werden.

9. Verfahren nach einem der Ansprüche 1 bis 8, **dadurch gekennzeichnet, dass** die Erreichbarkeitsinformationen für ein Endgerät (1, 2) und ein gegebenenfalls von ihm verwendeter öffentlicher Schlüssel durch die auf dem betreffenden Endgerät (1, 2) zur Nutzung des Verfahrens ablaufende Anwendung zeitzyklisch an die Netzeinrichtungen (3) des Mobilfunknetzes, in welches das Endgerät (1, 2) eingebucht ist, übertragen und dort in der netzseitig gehaltenen Datenbank aktualisiert werden.

10. Verfahren nach einem der Ansprüche 1 bis 5, **dadurch gekennzeichnet, dass** die Erreichbarkeitsinformationen für ein Endgerät (1, 2) und ein gegebenenfalls von ihm verwendeter öffentlicher Schlüssel durch eine auf den Netzeinrichtungen (3) des Mobilfunknetzes, in welches das betreffende Endgerät eingebucht ist, ablaufende softwarebasierte Anwendung bei dem Endgerät (1, 2) zeitzyklisch abgefragt und in der netzseitig gehaltenen Datenbank aktualisiert werden.
